# EUROPEAN PATENT SPECIFICATION

(11) **EP 3 222 593 B1**
(45) Date of publication and mention of the grant of the patent: **29.06.2022**
(21) Application number: 15862020.3
(22) Date of filing: 11.11.2015
(51) Int. Cl.: C03B 33/033, B28D 5/00, C03B 33/037

(54) **METHOD FOR SPLITTING GLASS PLATE**
VERFAHREN ZUM ZERTEILEN EINER GLASPLATTE
PROCÉDÉ DE COUPE D'UNE PLAQUE DE VERRE

(30) Priority: 19.11.2014 JP 2014235114; 27.01.2015 JP 2015013773
(43) Date of publication of application: 27.09.2017
(73) Proprietor: Bando Kiko Co., Ltd, Tokushima-shi, Tokushima 770-0871 (JP)
(72) Inventor: BANDO, Kazuaki, Tokushima-shi Tokushima 770-0871 (JP)
(74) Representative: J A Kemp LLP
(86) International application number: PCT/JP2015/005620
(87) International publication number: WO 2016/079951

(56) References cited:
- JP-A- H11 171 573
- JP-A- 2005 325 004
- JP-A- 2009 102 204
- JP-A- 2011 207 638
- JP-A- 2013 028 531
- JP-A- 2013 071 866
- JP-A- 2014 031 002
- US-A- 4 004 723
- US-A- 4 285 451
- US-A- 4 489 870
- US-B2- 7 128 250

## Description

### TECHNICAL FIELD

The present invention relates to a glass plate bend-breaking method after the formation of a cut line in the cutting and manufacturing process of automobile window glass and the like.

The present invention concerns a glass plate bend-breaking method in which a cut line is formed on a glass plate by a cutter wheel and an edge portion between the cut line and a peripheral edge of the glass plate is bend-broken.

The present invention concerns a glass plate bend-breaking method which, after the formation of a cut line in a maximally available size on unworked plate glass, is suitable for bend-breaking and separating a narrow portion, i.e., an edge portion, between the cut line and a peripheral edge of the glass plate.

### BACKGROUND ART

Patent Document 1 discloses a method and an apparatus in which a bend-breaking head having a pressing roller is moved along a cut line, and the pressing roller is pressingly and rollingly moved while being oriented along the cut line while being subjected to angular control, to bend-break a corner portion.

Patent Document 2 discloses a method and an apparatus in which a bend-breaking head having a pressing device for thrusting and punching applies thrusts to the edge portion at respective necessary portions while moving round the cut line, to effect bend-breaking and separation.

US 4,489,870 discloses method of severing bulb edges from a glass sheet in which scores are opened by applying torque about the score line on upper and lower edges of a trailing end of a glass sheet.

US 4,004,723 discloses a method of removal of glass sheet flash in which separation of the flash is effected mainly on account of its being pulled sidewise, which prevents formation of cracks and broken edges in the shape cut out from the sheet, which is sometimes the case when the flash is separated by the action of purely vertical loads.

US 7,128,250 discloses a method for cutting the edges of a continuous glass ribbon, moving at a speed VR, comprising a longitudinal marking stage which generates a marking line, in particular using a cutting wheel, a transverse marking stage, and a subsequent transverse breaking stage.

US 4,285,451 discloses a method in which bulb edges of a glass sheet severed from a glass ribbon, i.e., lehr ends are removed by imposing a pair of scores in the bulb edge with the score closest to the edge of the lehr end deeper than the other score. The surface of a resilient member lying in a plane subtending an oblique angle with the sheet is moved downward against the bulb edge to sequentially sever the bulb edge at the first and second scores.

JP11-171573 discloses a cracking device for glass plate which includes a glass plate supporting table which supports the glass plate, a cutter head means which forms a cracking line at the glass plate supported on this glass plate supporting table, a press cracking head means which press cracks the glass plate along the cracking line, a moving means which moves the cutter head means and the press cracking head means and a control means which controls the cracking line forming action of the cutter head means, the press cracking action of the press cracking head means and the moving action of the moving means.

### PRIOR ART DOCUMENTS

### PATENT DOCUMENTS

Patent Document 1: JP-A-3-164441
Patent document 2: Japanese Patent No. 2890137

### SUMMARY OF THE INVENTION

### PROBLEMS THAT THE INVENTION IS TO SOLVE

In the processing and production of automobile window glass, the size of unworked glass is made small to lower the production cost, a cut line is formed in a maximally available size on unworked plate glass, and the width (edge width) of the edge portion is made as practically narrow as possible, to thereby attain reduction of the amount of waste cullet.

If the width of the edge portion becomes narrow, in the conventional bend-breaking method and apparatus, it is difficult for its pressing roller and punching device to apply pressing pressure and thrust and punch only to the edge portion.

Accordingly, the present invention has been devised in view of the above-described aspect, and its object is to provide a bend-breaking method which is capable of simply and accurately bend-breaking and separating the narrow edge portion.

### MEANS FOR SOLVING THE PROBLEMS

In accordance with the present invention, a glass plate bend-breaking method for bend-breaking and separating an edge portion by causing a pressing roller to partially press the edge portion located between a peripheral edge of the glass plate and a cut line formed on the glass plate, comprises the steps of: causing the pressing body to slidingly move or rotatingly move at a predetermined bend-breaking position of the edge portion in a direction oriented from the cut line toward the peripheral edge of the glass plate while the edge portion is being pressed by the pressing body so that a line of contact between the pressing body and the glass plate becomes substantially parallel to the cut line.

### ADVANTAGES OF THE INVENTION

In accordance with the present invention, since the pressing body or the supporting body is moved relative to the glass plate in the edge portion, it is possible to simply and reliably apply a pressing force even to a narrow edge portion, with the result that it is possible to provide a bend-breaking method and apparatus which are capable of reliably bend-breaking and separating the narrow edge portion.

In addition, in accordance with the present invention, since the orientation of rotating direction of the pressing roller is adjusted to the normal direction to the cut line or the traversing direction oriented toward the peripheral edge of the glass plate in the edge portion, a line of contact between the pressing roller and the glass plate becomes substantially parallel to the cut line, so that only the edge portion can be pressed by the pressing roller, and therefore pressing pressure can be applied simply and reliably even to the narrow edge portion. Hence, it is possible to provide a bend-breaking method and apparatus which are capable of reliably bend-breaking and separating the narrow edge portion.

### BRIEF DESCRIPTION OF THE DRAWINGS

Fig. 1 is an explanatory view of a preferred embodiment of the present invention;
Fig. 2 is an explanatory plan view illustrating the abutting direction and posture of a bend-breaking head with respect to unworked plate glass and a cut line;
Fig. 3 is an explanatory enlarged view of the abutting direction and posture of the bend-breaking head shown in Fig. 2;
Fig. 4 is an explanatory view of the bend-breaking operation in the embodiment shown in Fig. 1;
Fig. 5 is an explanatory view of the bend-breaking operation in the embodiment shown in Fig. 1;
Fig. 6 is an explanatory cross-sectional view of a pressing roller in the embodiment shown in Fig. 1;
Fig. 7 is an explanatory cross-sectional view of another example of the pressing roller in the embodiment shown in Fig. 1;
Fig. 8 is an explanatory view of still another example of the pressing roller in the embodiment shown in Fig. 1;
Fig. 9 is an explanatory front elevational view of a glass cutting apparatus in which a bend-breaking head is juxtaposed to a scribe head for cut line formation;
Fig. 10 is an explanatory view of another preferred embodiment of the present invention;
Fig. 11 is an explanatory view of the bend-breaking operation in the embodiment shown in Fig. 10;
Fig. 12 is an explanatory view of the bend-breaking operation in the embodiment shown in Fig. 10;
Fig. 13 is a partial explanatory view of still another preferred embodiment of the present invention;
Fig. 14 is an explanatory view of the bend-breaking operation in the embodiment shown in Fig. 13; and
Fig. 15 is a partial explanatory view of a further preferred embodiment of the present invention.

### MODE FOR CARRYING OUT THE INVENTION

Hereafter, a description will be given of the preferred embodiments of the present invention with reference to the drawings. It should be noted that the invention is not limited to these embodiments.

### Embodiments

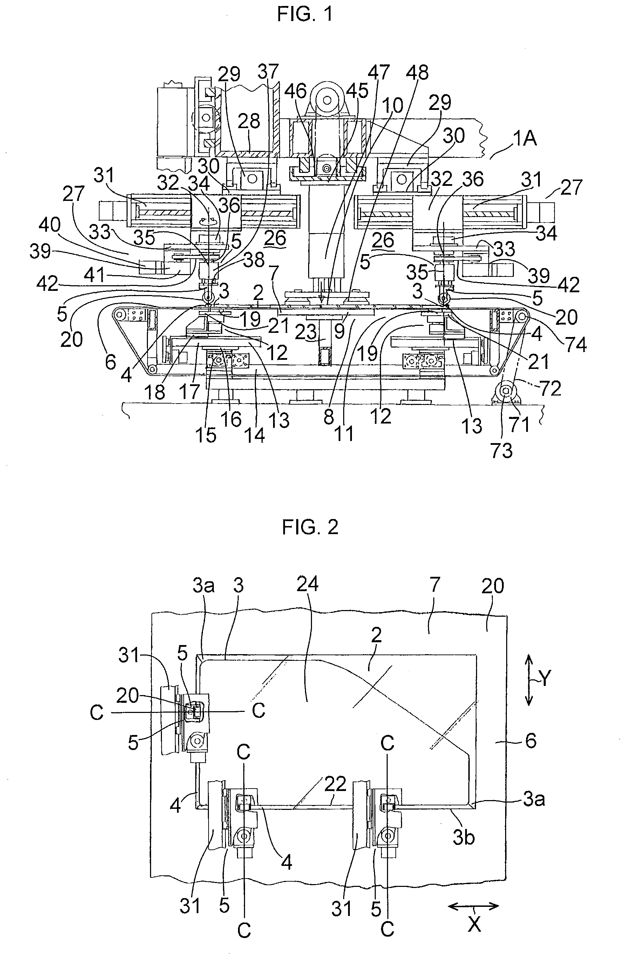

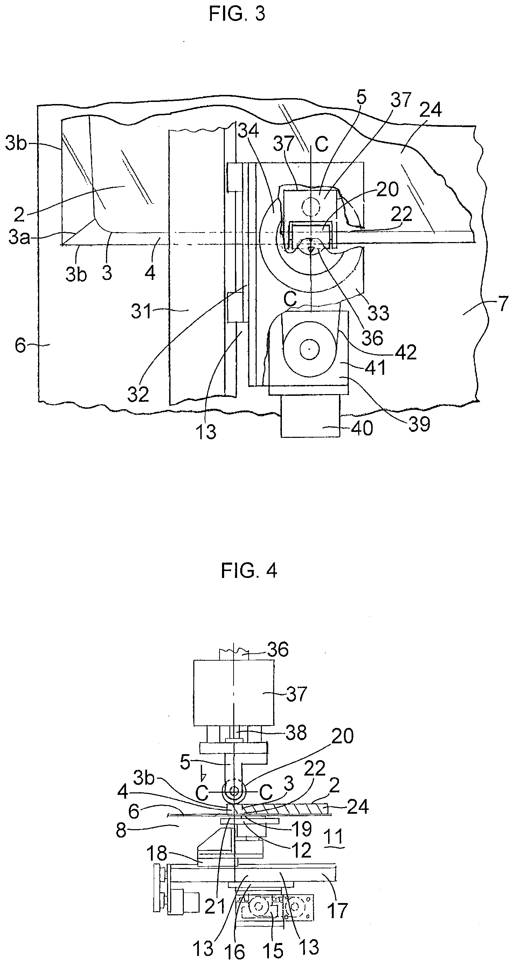

As shown in Figs. 1 to 5, a bend-breaking apparatus 1A is comprised of a supporting device 7 for supporting a glass plate 2 planarly on an upper surface thereof; a pair of bend-breaking heads 5 which are moved in an X-axis direction and a Y-axis direction within a horizontal plane with respect to the supporting device 7 by being NC controlled above the supporting device 7; a pair of moving devices 27 for respectively moving the pair of bend-breaking heads 5 in the X-axis direction and the Y-axis direction within the horizontal plane; a transporting device 45 for transporting the glass plate 2; a base 14; and a mount 28 which is provided above the base 14.

In a state in which the glass plate 2 having an edge portion 4 located outside a cut line 3 formed in advance on an upper surface thereof and a main body portion 24 located inside the cut line 3 is supported on an upper surface of the supporting device 7, the bend-breaking apparatus 1A is adapted to sequentially perform the bend-breaking and separation of edge portions 4 of the glass plate 2 by moving the respective bend-breaking heads 5 to predetermined bend-breaking positions of the edge portions 4 of the glass plate 2 under NC control.

In addition to cut lines 3, end cut lines 3a are formed in advance on the upper surface of the glass plate 2 at necessary portions, mostly at corner portions of the glass plate 2.

The supporting device 7 has a flexible endless belt 6 for placing the glass plate 2 on an upper surface thereof and a supporting table mechanism 8 provided below the endless belt 6.

The supporting table mechanism 8 includes a fixed central supporting table 9 mounted on a supporting column 23 provided uprightly on the base 14 so as to support the main body portion 24 at a central region 10 through the endless belt 6, a pair of horizontally movable partially supporting tables 12 for partially supporting the glass plate 2 through the endless belt 6, and a pair of moving devices 13 provided in an outer region 11 around the central supporting table 9 so as to respectively move the pair of partially supporting tables 12 horizontally in the outer region 11 under NC control.

Each of the moving devices 13 comprises an X-axis moving mechanism 15 mounted on the base 14 and a Y-axis moving mechanism 17 mounted on and supported by an X moving body 16 of the X-axis moving mechanism 15, and each partially supporting table 12 is mounted on and supported by a Y moving body 18 of the corresponding Y-axis moving mechanism 17.

Each of the partially supporting tables 12 has a partially supporting surface portion 19 for partially supporting the glass plate 2 at the same height as the central supporting table 9 and a stepped surface portion 21 which is 2 to 3 mm lower than the partially supporting surface portion 19. In the bend-breaking and separation of the edge portion 4, each of the partially supporting tables 12 supports a portion 22 at the cut line 3 on the glass plate 2 and the main body portion 24 in the vicinity of the cut line 3, and the stepped surface portion 21 is positioned immediately underneath the edge portion 4 to allow the bending of the glass plate 2 by the application of a pressing force against the edge portion 4 by a rotatable pressing roller 20 serving as a pressing body and the escape of the edge portion 4 to the stepped surface portion 21 side.

After the bend-breaking of the edge portion 4 from the main body portion 24 and after the transport of the main body portion 24 by the transporting device 45, the endless belt 6 is adapted to travel by means of a belt 72 and pulleys 73 and 74, around which the belt 72 is wound, by the operation of an electric motor 71 so as to discharge from the endless belt 6 the edge portion 4 serving as bend-breaking cullet remaining on the endless belt 6.

Each of the bend-breaking heads 5 is held above the supporting device 7 by each of a pair of moving devices 27 provided in each of a pair of spaces 26 with the central region 10 located therebetween.

Each of the moving devices 27 comprises an X-axis moving unit 29 mounted on the mount 28 and a Y-axis moving unit 31 mounted on an X moving body 30 of the X-axis moving unit 29, and each of the bend-breaking heads 5 is mounted on a Y moving body 32 of the corresponding Y-axis moving unit 31.

Each of the bend-breaking heads 5 includes a bracket 33 mounted on the Y moving body 32; a bearing unit 34 mounted on the bracket 33; a rotating shaft 36 which is rotatably held by the bearing unit 34 and has a rotational axis 35 perpendicular to the upper surface of the glass plate 2, i.e., a supporting surface of the partially supporting surface portion 19; an air cylinder unit 37 mounted at a lower end of the rotating shaft 36; the pressing roller 20 which is rotatably mounted at a lower end of a piston rod 38 of the air cylinder unit 37 on the rotational axis 35 of the rotating shaft 36; and an angle controller 39 for rotating the rotating shaft 36 under angular control by means of a transmitting means 42 such a pulley and a belt.

The piston rod 38 of the air cylinder unit 37 is adapted to be synchronously rotated by the rotation of the rotating shaft 36 about the rotational axis 35. As the air pressure to the air cylinder unit 37 is changed over, the pressing roller 20 is adapted to be synchronously moved upwardly and downwardly by the upward and downward movement of the piston rod 38 and to be brought into contact with and pressed against the upper surface of the glass plate 2 and moved away upwardly from the upper surface of the glass plate 2 by this upward and downward movement.

The angle controller 39 has an NC control motor 40 and a speed reducer 41 and is mounted on the bracket 33 at the speed reducer 41, and the rotating shaft 36, the air cylinder unit 37, and the pressing roller 20 are integrally rotated under angular control about the rotational axis 35 perpendicular to the upper surface of the glass plate 2 by the angle controller 39.

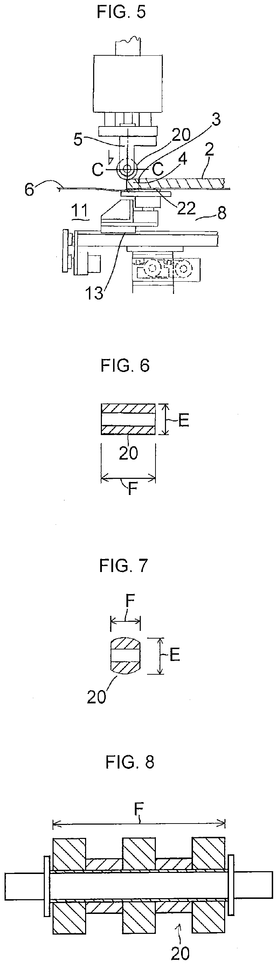

As shown in Figs. 6 and 7, the pressing roller 20 which is molded from, for example, urethane resin may be constituted by a cylindrical body having a diameter E of 10 mm to 30 mm and a horizontal width F of not less than 10 mm, preferably from 50 mm to 60 mm or a spherical body having a diameter E of from 10 mm to 30 mm. Still alternatively, as shown in Fig. 8, the pressing roller 20 may be one in which a plurality of cylindrical bodies or spherical bodies shown in Figs. 6 and 7 are connected together with the width F of not less than 10 mm in an axial direction. By setting the diameter E of the pressing roller 20 to from 10 mm to 15 mm, it is possible to bend-break and separate a narrow edge portion 4 of from 4 mm to 5 mm more accurately.

In order to effect the carrying in of the glass plate 2 onto the supporting device 7 after the formation of the cut line and the carrying out of the main body portion 24 of the bend-broken glass plate 2 from the supporting device 7, the transporting device 45 provided above the central region 10 is provided with a moving body 46 which moves linearly in the X-axis direction, a vertically moving unit 47 which is mounted on the moving body 46 and is raised and lowered in the vertical direction, and a suction pad 48 provided at a lower end of the vertically moving unit 47 to effect the suction and release of suction of the glass plate 2.

During the bend-breaking operation of the glass plate 2, the suction pad 48 is lowered by the vertically moving unit 47, and presses and fixes the glass plate 2 immovably onto the central supporting table 9 through the endless belt 6.

Hereafter, a description will be given of the operation and a bend-breaking method by means of the bend-breaking apparatus 1A.

After the glass plate 2 is sucked by the suction pad 48 of the transporting device 45 and carried into the central region 10 by the moving body 46 of the transporting device 45, the glass plate 2 is pressed against the central supporting table 9 in the central region 10 by the suction pad 48, whereupon the partially supporting table 12 and the bend-breaking head 5 are moved to the predetermined bend-breaking position of the edge portion 4 and are opposed to each other with the glass plate 2 and the endless belt 6 located therebetween.

The partially supporting surface portion 19 located underneath the cut line 3 of the glass plate 2 supports the main body portion 24, while the stepped surface portion 21 located underneath the edge portion 4 of the glass plate 2 forms under the edge portion 4 an escape portion which allows the bending down of the edge portion 4.

Simultaneously as the pressing roller 20 is positioned above the edge portion 4, the pressing roller 20 is subjected to angular control about the rotational axis 35, and the orientation of its rolling direction is thereby adjusted to a normal direction C - C to the cut line 3 or a direction of traversing the edge portion 4 which is a direction oriented from the cut line 3 toward a peripheral edge 3b of the glass plate 2.

The pressing roller 20 is lowered in a posture in which the direction of rolling movement is adjusted to the normal direction C - C or the traversing direction and presses the edge portion 4, and the pressing roller 20 in this pressing state is rollingly moved in the normal direction C - C or the traversing direction.

Since the pressing roller 20 has a circular outer periphery and its rotational axis is in a state of being parallel to the cut line 3 or approximate thereto, the pressing roller 20 presses only the edge portion 4 by a circular contact surface of a lower end thereof. Further, since the pressing roller 20 rollingly moves in the normal direction C - C or the traversing direction, the pressing roller 20 imparts a sufficient bending load to the edge portion 4 and performs the bend-breaking and separation of the edge portion 4 accurately in conjunction with the escape portion below the edge portion 4.

The movement of the partially supporting tables 12 and the bend-breaking heads 5 are moved by being subjected to NC control in an orthogonal X-Y planar coordinate system

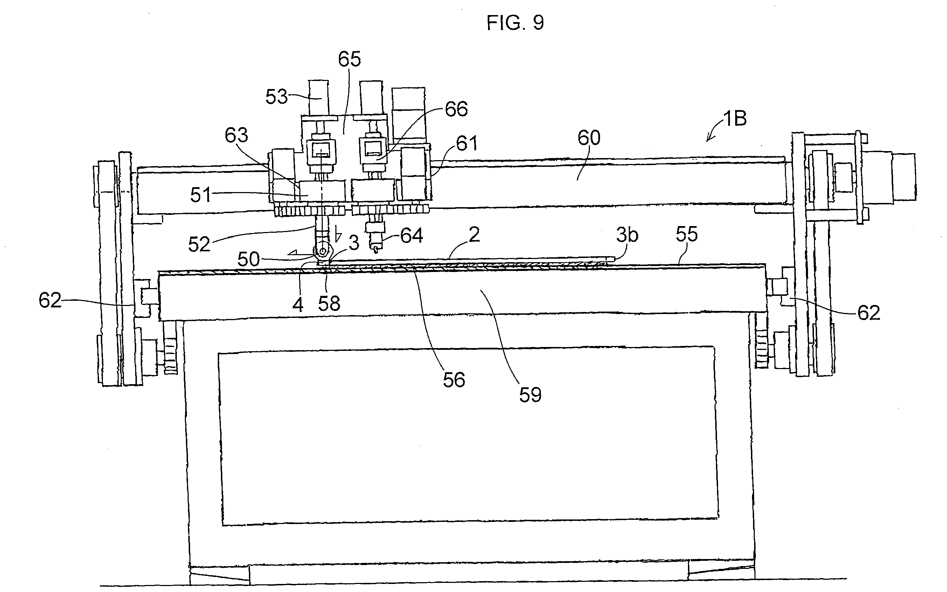

A glass plate cutting apparatus 1B with a bend-breaking apparatus shown in Fig. 9 is comprised of a supporting table 59; a pair of X-axis moving devices 62 respectively provided on both sides of the supporting table 59; a Y-axis moving device 60 mounted on the X-axis moving devices 62; and a common processing head 65 which is mounted on a moving body 61 of the Y-axis moving device 60 to effect orthogonal coordinate system movement over the planarly supported glass plate 2 in parallel with the upper surface of the glass plate 2. A cutting head 66 having a cutter wheel 64 and a bend-breaking head 63 are juxtaposed on the processing head 65.

In the glass plate cutting apparatus 1B, the cut line 3 is formed on the glass plate 2 by the cutter wheel 64 by operating the cutting head 66 in the first orthogonal coordinate system movement of the processing head 65 on the basis of NC processing information stored therein. Then, in the second orthogonal coordinate system movement, the bend-breaking of the edge portion 4 outside the cut line 3 is effected by operating the bend-breaking head 63.

The bend-breaking head 63 has a pressing roller 50, a spline shaft 52, an angle controller 51 for angularly controlling the spline shaft 52, and an air cylinder unit 53 for vertically moving the pressing roller 50.

The glass plate 2 is planarly supported on a sheet 55 on the upper surface of the supporting table 59 through a template 56 having a thickness of 2 mm to 3 mm

The template 56 is formed in a shape and a size substantially identical to those of the cut line 3 and forms a space 58 underneath the edge portion 4 between the peripheral edge 3b of the glass plate 2 and the cut line 3, to thereby allow the edge portion 4 to escape during bend-breaking.

In the glass plate cutting apparatus 1B, the bend-breaking operation of the edge portion 4 by the bend-breaking head 63 is performed in the same way as the bend-breaking apparatus 1A.

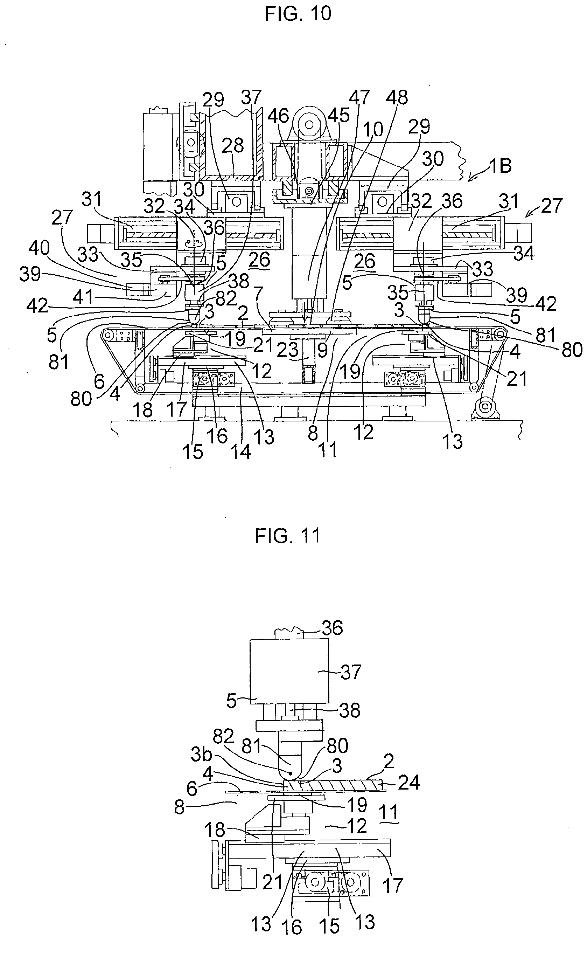

Incidentally, although the bend-breaking apparatus 1A is adapted to bend-break and separate the edge portion 4 from the main body portion 24 by using the rotatable pressing roller 20 as the pressing body and by rollingly moving the pressing roller 20 in the normal direction C - C or the traversing direction, an arrangement may alternatively be adopted as follows: As shown in Fig. 10, a pressing rod 81 which serves as a pressing body and whose distal end face (pressing face) 80 is cylindrically shaped is mounted at a lower end of the piston rod 38; in the application of a pressing force against the edge portion 4 by the pressing rod 81, the pressing rod 81 is subjected to angular control about the rotational axis 35 such that a center 82 of the cylindrical surface of the distal end face 80 extends in a direction perpendicular to the normal direction C - C or the direction of traversing the edge portion 4, and a bend-breaking force is applied to the edge portion 4 by the pressing rod 81 as the pressing rod 81 at the distal end face 80 presses and contacts the edge portion 4 by the lowering of the pressing rod 81 subsequent to the angular control; and, thereafter, in the same way as the bend-breaking apparatus 1A, the pressing rod 81 at the distal end face 80 is slidingly moved in the normal direction C - C or the direction of traversing the edge portion 4 while maintaining the pressing and contacting of the edge portion 4 by the pressing rod 81 at the distal end face 80, to thereby bend-break and separate the edge portion 4 from the main body portion 24.

The distal end face 80 of the pressing rod 81 may be spherically shaped instead of being cylindrically shaped as shown in Fig. 10, and in the case of the pressing rod 81 having the spherical distal end face 80, the angular control of the pressing rod 81 about the rotational axis 35 can be omitted.

In addition, although, in the above, the edge portion 4 is adapted to be bend-broken and separated from the main body portion 24 by moving the pressing roller 20 or the pressing rod 81 in the normal direction C - C or the direction of traversing the edge portion 4 and by forming in advance the escape portion under the edge portion 4 for allowing bending down of the edge portion 4, an arrangement may alternatively be adopted as follows: As shown in Figs. 10 to 12, the partially supporting surface portion 19 is positioned in advance underneath the edge portion 4, and in this state the partially supporting surface portion 19 is moved beyond the cut line 3 in the normal direction C - C or the direction of traversing the edge portion 4, i.e., a direction oriented from the peripheral edge 3b toward the cut line 3 simultaneously with the pressing of the edge portion 4 by the distal end face 80 due to the lowering of the pressing rod 81 subsequent to the angular control, to thereby form an escape portion under the edge portion 4 for allowing the bending down of the edge portion 4. By the formation of this escape portion, the edge portion 4 may be bend-broken and separated from the main body portion 24 by the bend-breaking force applied to the edge portion 4 by the pressing rod 81.

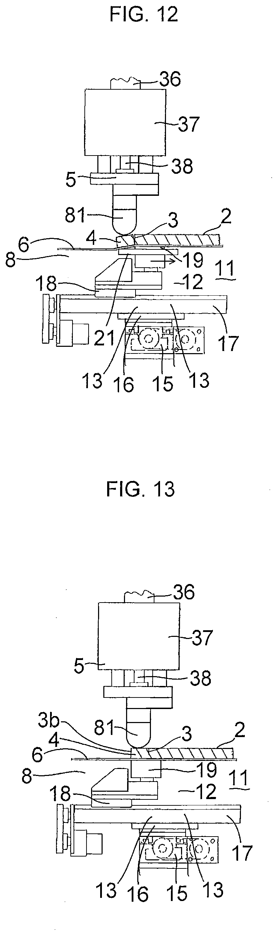

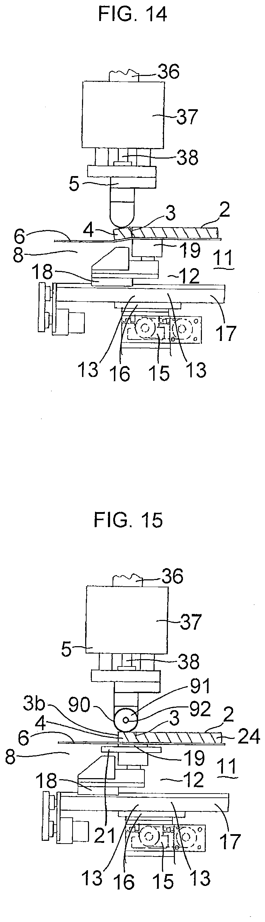

Furthermore, although, in the above, each of the partially supporting tables 12 has the partially supporting surface portion 19 and the stepped surface portion 21, each of the partially supporting tables 12 may have the partially supporting surface portion 19, but may not have the stepped surface portion 21, as shown in Figs. 13 and 14. In the partially supporting table 12 shown in Figs. 13 and 14, the escape portion for allowing the bending down of the edge portion 4 is adapted to be formed around the partially supporting surface portion 19 itself underneath the edge portion 4 by the movement of the partially supporting surface portion 19 beyond the cut line 3 in the normal direction C - C or the direction of traversing the edge portion 4, i.e., the direction oriented from the peripheral edge 3b toward the cut line 3.

The partially supporting table 12 which is not provided with the stepped surface portion 21 can also be used in the bend-breaking apparatus 1A shown in Figs. 1 to 5.

As the pressing body, in substitution for the pressing rod 81 having the pressing roller 20 and the cylindrical or spherical distal end face 80, it is possible to use a pressing member 91 constituted by a columnar body or a cylindrical body having a diameter E of from 10 mm to 30 mm, preferably from 10 mm to 15 mm, and a width F of not less than 10 mm, preferably from 50 mm to 60 mm, as shown in Fig. 15. Such a pressing member 91 having a cylindrical surface 90 may be caused to effect an operation similar to the operation shown in Figs. 10 to 12 or the operation shown in Figs. 13 and 14, namely, the operation in which the partially supporting surface portion 19 is moved beyond the cut line 3 in the normal direction C - C or the direction of traversing the edge portion 4, i.e., the direction oriented from the peripheral edge 3b toward the cut line 3 simultaneously with the pressing of the edge portion 4 by the cylindrical surface 90 due to the lowering of the pressing member 91, to thereby form the escape portion under the edge portion 4 for allowing the bending down of the edge portion 4, whereby, by the formation of this escape portion, the edge portion 4 is bend-broken and separated from the main body portion 24 by the bend-breaking force applied to the edge portion 4 by the pressing member 91. Such a pressing member 91 constituted by a columnar body or a cylindrical body may not rotate, but may be adapted to rotate about a center 92 of the columnar body or the cylindrical body.

Furthermore, the pressing body may be mounted on the lower end of the piston rod 38 in an inclined manner so as to push out the edge portion 4 toward the peripheral edge 3b side in the bend-breaking of the edge portion 4.

### DESCRIPTION OF REFERENCE NUMERALS

- 1A:: bend-breaking apparatus
- 2:: glass plate
- 3:: cut line
- 4:: edge portion
- 5:: bend-breaking head
- 6:: endless belt
- 7:: supporting device
- 8:: supporting table mechanism
- 9:: central supporting table
- 12:: partially supporting table
- 13:: moving device
- 14:: base
- 15:: X-axis moving mechanism
- 16, 30:: X moving body
- 17:: Y-axis moving mechanism
- 18, 32:: Y moving body
- 19:: partially supporting surface portion
- 21:: stepped surface portion
- 24:: main body portion
- 27:: moving device
- 28:: mount
- 29:: X-axis moving unit
- 31:: Y-axis moving unit

## Claims

1. A method of bend-breaking a glass plate (2) for bend-breaking and separating an edge portion (4) by causing a pressing body to partially press the edge portion (4) located between a peripheral edge of the glass plate and a cut line (3) formed on the glass plate (2), comprising the steps of: causing the pressing body to slidingly move or rotatingly move at a predetermined bend-breaking position of the edge portion (4) in a direction oriented from the cut line (3) toward the peripheral edge of the glass plate (2) while the edge portion (4) is being pressed by the pressing body so that a line of contact between the pressing body and the glass plate (2) becomes substantially parallel to the cut line (3).

2. The method of bend-breaking the glass plate according to claim 1,
wherein said pressing body comprises pressing roller,
said method of bend-breaking the glass plate comprising the steps of:
causing the pressing roller whose orientation of rolling direction is adjusted to a normal direction to the cut line (3) to rotatingly move at a predetermined bend-breaking position of the edge portion (4) in the normal direction toward the peripheral edge of the glass plate (2) while the edge portion (4) is being pressed by the pressing roller.

3. The method of bend-breaking the glass plate according to claim 1,
wherein said pressing body comprises a horizontally elongated pressing body,
said method of bend-breaking the glass plate comprising the steps of:
causing the pressing body whose longitudinal direction is adjusted to a direction perpendicular to a direction of traversing the edge portion (4) from the cut line (3) toward the peripheral edge of the glass plate (2) to slidingly move at a predetermined bend-breaking position of the edge portion (4) in the traversing direction while the edge portion (4) is being pressed by the pressing body.

## Patentansprüche

1. Verfahren zum Biegebrechen einer Glasplatte (2) zum Biegebrechen und Abtrennen eines Randabschnitts (4), indem ein Presskörper veranlasst wird, den Randabschnitt (4), der sich zwischen einem Umfangsrand der Glasplatte und einer Schnittlinie (3), die auf der Glasplatte (2) gebildet ist, befindet, teilweise zu pressen, wobei das Verfahren folgende Schritte umfasst: Veranlassen des Presskörpers, sich gleitend oder rotierend an einer vorbestimmten Biegebrechposition des Randabschnitts (4) in einer Richtung zu bewegen, die von der Schnittlinie (3) in Richtung des Umfangsrandes der Glasplatte (2) orientiert ist, während der Randabschnitt (4) durch den Presskörper gepresst wird, so dass eine Kontaktlinie zwischen dem Presskörper und der Glasplatte (2) im Wesentlichen parallel zur Schnittlinie (3) wird.

2. Verfahren zum Biegebrechen der Glasplatte nach Anspruch 1,
wobei der Presskörper eine Pressrolle umfasst,
wobei das Verfahren zum Biegebrechen der Glasplatte folgende Schritte umfasst:
Veranlassen der Pressrolle, deren Rollrichtung auf eine normale Richtung zur Schnittlinie (3) eingestellt ist, sich an einer vorbestimmten Biegebrechposition des Randabschnitts (4) in der normalen Richtung in Richtung des Umfangsrandes der Glasplatte (2) rotierend zu bewegen, während der Randabschnitt (4) durch die Pressrolle gepresst wird.

3. Verfahren zum Biegebrechen der Glasplatte nach Anspruch 1,
wobei der Presskörper einen horizontal langgestreckten Presskörper umfasst,
wobei das Verfahren zum Biegebrechen der Glasplatte folgende Schritte umfasst:
Veranlassen des Presskörpers, dessen Längsrichtung auf eine Richtung senkrecht zu einer Richtung des Durchlaufens des Kantenabschnitts (4) von der Schnittlinie (3) in Richtung der Umfangskante der Glasplatte (2) eingestellt ist, sich an einer vorbestimmten Biegebrechposition des Randabschnitts (4) in der Querrichtung gleitend zu bewegen, während der Randabschnitt (4) durch den Presskörper gepresst wird.

## Revendications

1. Procédé de cintrage et de rupture d'une plaque de verre (2) pour cintrer et rompre et séparer une partie de bord (4) en faisant en sorte qu'un corps de pressage comprime partiellement la partie de bord (4) située entre un bord périphérique de la plaque de verre et une ligne de coupe (3) formée sur la plaque de verre (2), comprenant les étapes consistant à : amener le corps de pressage à se déplacer de manière coulissante ou rotative à une position de cintrage et de rupture prédéterminée de la partie de bord (4) dans une direction orientée à partir de la ligne de coupe (3) vers le bord périphérique de la plaque de verre (2) tandis que la partie de bord (4) est pressée par le corps de pressage de sorte qu'une ligne de contact entre le corps de pressage et la plaque de verre (2) devienne sensiblement parallèle à la ligne de coupe (3).

2. Procédé de cintrage et de rupture de la plaque de verre selon la revendication 1,
dans lequel ledit corps de pressage comprend un rouleau de pressage,
ledit procédé de cintrage et de rupture de la plaque de verre comprenant les étapes consistant à : amener le rouleau de pressage dont l'orientation de la direction de roulement est ajustée à une direction normale à la ligne de coupe (3) pour se déplacer en rotation à une position de cintrage et de rupture prédéterminée de la partie de bord (4) dans la direction normale vers le bord périphérique de la plaque de verre (2) tandis que la partie de bord (4) est pressée par le rouleau de pressage.

3. Procédé de cintrage et de rupture de la plaque de verre selon la revendication 1,
dans lequel ledit corps de pressage comprend un corps de pressage allongé horizontalement,
ledit procédé de cintrage et de rupture de la plaque de verre comprenant les étapes consistant à : amener le corps de pressage dont la direction longitudinale est ajustée à une direction perpendiculaire à une direction de traversée de la partie de bord (4) depuis la ligne de coupe (3) vers le bord périphérique de la plaque de verre (2) pour se déplacer de manière coulissante à une position de cintrage et de rupture prédéterminée de la partie de bord (4) dans la direction de traversée tandis que la partie de bord (4) est pressée par le corps de pressage.
